# EUROPEAN PATENT APPLICATION

(11) **EP 1 469 456 A1**
(43) Date of publication of application: **20.10.2004**
(21) Application number: 03701135.0
(22) Date of filing: 21.01.2003
(51) Int. Cl.: G10K 15/04, G06T 1/00, H04N 5/93

(54) **IMAGE DELIVERY APPARATUS**

(30) Priority: 23.01.2002 JP 2002013789; 19.04.2002 JP 2002118227; 19.04.2002 JP 2002118228
(71) Applicant: KONICA CORPORATION, Tokyo 163-0512 (JP)
(72) Inventor: UEDA, Yutaka, Konika Minolta Photo Imaging, Inc., Hachioji-shi, Tokyo 192-8505 (JP); HARAGA, Hideaki, Konika Minolta Photo Imaging, Inc, Shinjuku-ku, Tokyo 163-0512 (JP); IGARASHI, Takashi, Konika Minolta Photo Imag., Inc, Hino-shi, Tokyo 191-8511 (JP); SAWADA, Katsutoshi, Konika Minolta Tech. Ctr.,Inc., Hino-shi, Tokyo 191-8511 (JP)
(74) Representative: Nicholls, Michael John
(86) International application number: PCT/JP2003/000467
(87) International publication number: WO 2003/063132

(57) **Abstract**

There are provided an information recording medium in which an electronic album capable of effectively reproducing image data and musical-and-vocal data is recorded, and a slide show execution program. In this information-recording medium, there is recorded a set of image data that a customer provides, musical-and-vocal data that the customer selects at an order shop in a retail store or the like, and a computer program that reproduces the image data and the musical-and-vocal data, correlating them with each other. On the surface of the information-recording medium or on the jacket of a storage case, printing is performed so that each recorded image data and each recorded musical-and-vocal data can be identified, and play duration, tempo, number of phrases, etc. are extracted by analyzing musical-and-vocal data, based on a recorded slide show execution program, so that image data is displayed in synchronization with reproduced musical-and-vocal data, which creates a feeling of unity between the image data and the musical-and-vocal data to increase the effects of a slide show.

## Description

### FIELD OF THE INVENTION

The present invention relates to an information-recording medium in which an electronic album that effectively displays image information provided by a customer is recorded, and a method producing the same.

### TECHNICAL BACKGROUND

In recent years, customers who handle photographs taken by a camera as digital image data are increasing. For example, regarding digital cameras, image data stored in an information-recording medium is read by a terminal such as a PC (personal computer), and reproduced with image display software installed on the PC, which allows viewing photographs easily.

Further, conversion services from photographs taken with a film camera into digital image data are carried out. For example, when a customer brings a photographed film to a photo-service shop such as a processing laboratory or an order shop, which handles photo services, in various retail stores (such as a convenience store, a drug store, a department store, a large scale retail shop, etc. hereinafter referred to as retail shops), then the photo-service shop or the order shop provides such services as to develop the film, then read the negative film with a scanner or the like, and write the read image data into an information-recording medium such as a CD-R. Further, customers who use a digital camera as described above desire to backup the information-recording medium, in which the image data photographed by a digital camera is recorded, into another image-recording medium such as a CD-R, while order shops also provide surrogate services for that.

A customer who has received an information-recording medium, such as a CD-R in which image data is written, reproduces the image data by the use of a terminal such as a PC at home to enable viewing the photographic images, and even a customer possessing no digital camera can handle photographs as digital image data.

However, in the above conventional data conversion service, the aggregation of image data read from photographs of a film or image data photographed by a digital camera is merely written in an information-recording medium, and the operation of displaying the image data is required on the customer side, which only allows viewing photographs individually, resulting in a problem of not enjoying a series of image data as in an album.

To enjoy an aggregation of image data as an album, there are methods for displaying the image data continuously, using electronic album software or slide show software installed on a PC, and it is possible to effectively display each image data by the use of slide effects, but, in this case also, the image data are merely displayed in a sequential order designated by the customer, having a low value as an album.

Particularly, in the case when a customer gives photographic images photographed by the customer to an acquaintance or a friend as digital data, if electronic album software or slide show software is not installed on the PC of another customer having received the image data, the image data cannot be displayed as an album, and even if this kind of software is installed, displaying the image data merely in a locked-in order does not allow enjoying an album.

On the other hand, in recent years, musical-and-vocal information has been handled as digital data, and functions capable of reproducing musical-and-vocal data have also been added to PCs to allow enough enjoyment of music even with a PC. Accordingly, software for reproducing musical-and-vocal data as BGM (back ground music) of a slide show is provided, but, in the case of conventional software, there is no correlation between the image data and the musical-and-vocal data, and BGM is merely played without increasing value to a slide show.

Further, although some of the electronic album software or the slide show software described above performs an array-display of index images (thumb-nail images) of image data, when image data obtained from a plurality of films are displayed, the image data are only sequentially lined up, resulting in a problem of not allowing easy identification as to from which film or medium the respective image data have been obtained.

The present invention has been devised, taking this problem into account, wherein a primary object thereof is to provide an information-recording medium in which an electronic album capable of effectively reproducing image data and musical-and vocal data are recorded, and to provide a slide show execution program.

A secondary object of the invention is to provide an information-recording medium in which an electronic album capable of effectively displaying image data is recorded, and a method of producing the same.

### DISCLOSURE OF THE INVENTION

The above objects of the invention can be attained by the following items.
(1) An information-recording medium in which image information and musical-and-vocal information are recorded, characterized in that a computer program is stored in the information-recording medium, wherein the computer program functions as means for causing a computer to display images on displaying means in a slide displaying mode, the images being based on the image information, and to emit musical-and-vocal sounds from a speaker, synchronizing the musical-and-vocal sounds with the slide displaying mode, the musical-and-vocal sounds being based on the musical-and-vocal information.
(2) An information-recording medium in which image information and musical-and-vocal information are recorded, characterized in that: a computer program is stored in the information-recording medium, wherein the computer program functions as means for causing a computer to display images on displaying means in a slide displaying mode, the images being based on the image information, and emit musical-and-vocal sounds from a speaker, synchronizing the musical-and-vocal sounds with the slide displaying mode, the musical-and-vocal sounds being based on the musical-and-vocal information; and the images being based on the image information, and the names of music corresponding to the musical-and-vocal information, are printed on the surface of the information-recording medium.
(3) An information-recording medium in which image information and musical-and-vocal information are recorded, the information-recording medium being in a package, characterized in that: a computer program is stored in the information-recording medium, wherein the computer program functions as means for causing a computer to display images on displaying means in a slide displaying mode, the images being based on the image information, and emit musical-and-vocal sounds from a speaker, synchronizing the musical-and-vocal sounds with the slide displaying mode, the musical-and-vocal sounds being based on the musical-and-vocal information; and the package includes a jacket on which the images based on the image information, and the names of music corresponding to the musical-and-vocal information, are printed.
   In the invention, the musical-and-vocal information is that of a plurality of musical pieces, and the abovementioned printing is performed preferably in such a manner that it is possible to recognize the correlation between the images displayed in the slide displaying mode and the names of the music of the musical and vocal information of which musical-and-vocal sounds are emitted in synchronization with the slide displaying mode.
(4) An information-recording medium in which image information and musical-and-vocal information are recorded, characterized in that: a computer program is stored in the information-recording medium, wherein the computer program functions as means for causing a computer to display images on displaying means in a slide displaying mode, the images being based on the image information, and to emit musical-and-vocal sounds from a speaker, synchronizing the musical-and-vocal sounds with the slide displaying mode, the musical-and-vocal sounds being based on the musical-and-vocal information; the image information has been obtained by scanning a film; and, in emitting the musical-and-vocal sounds synchronized with the slide displaying mode, musical-and-vocal sounds based on the musical-and-vocal information of one musical piece are emitted for each respective slide display that corresponds to image information of one roll of film.
(5) An information-recording medium in which image information and musical-and-vocal information are recorded, characterized in that: a computer program is stored in the information-recording medium, wherein the computer program functions as means for causing a computer to display images on displaying means in a slide displaying mode, the images being based on the image information, and to emit musical-and-vocal sounds from a speaker, synchronizing the musical-and-vocal sounds with the slide displaying mode, the musical-and-vocal sounds being based on the musical-and-vocal information; and in the slide display operation, the individual images are displayed, equally sharing the duration of emitting the musical-and-vocal sounds that are based on the musical-and-vocal information of one musical piece.
(6) An information-recording medium in which image information and musical-and-vocal information are recorded, characterized in that: a computer program is stored in the information-recording medium, wherein the computer program functions as means for causing a computer to display images on displaying means in a slide displaying mode, the images being based on the image information, and to emit musical-and-vocal sounds from a speaker, synchronizing the musical-and-vocal sounds with the slide displaying mode, the musical-and-vocal sounds being based on the musical-and-vocal information; and, slides are switched for every phrase in the slide display operation, referring to phrase information extracted from the musical-and-vocal information.
(7) An information-recording medium in which image information and musical-and-vocal information are recorded, characterized in that: a computer program is stored in the information-recording medium, wherein the computer program functions as a means for causing a computer to display images, the images being based on the image information, on a displaying means in a slide displaying mode with slide effect established in advance, and emit musical-and-vocal sounds from a speaker in synchronization with the slide displaying mode, the musical-and-vocal sounds being based on the musical-and-vocal information; and the processing time of the slide effect is adjusted, according to tempo information of a musical piece extracted from the musical-and-vocal information.
   In the invention, the phrase information or the tempo information is preferably extracted by employing frequency analysis or score analysis.
   Further in the invention, it is possible to record a computer program to function as means for causing the computer to display an information input icon which is utilized to reverse the display order of the images to be displayed on the displaying means in the slide displaying mode.
   Still further in the invention, it is possible to record a computer program to function as means for causing the computer to display a preview of an image for confirmation of the slide switching effect on the image to be displayed on the displaying means in the slide displaying mode.
   Yet further in the invention, it is possible to record date-and-time information on the surface, wherein the date-and-time information is preferably photography time information of the image information or production time information of the information-recording medium.
(8) A computer program to cause a computer to function as:
   means for computing the play duration of musical-and-vocal information from recognizable information in a file of the musical-and-vocal information recorded in advance in an information-recording medium, for example, file size, header information, or simulation (the capacity is computed by decoding a compressed information file.); means for computing the display duration per image, dividing the play duration by the number of image information files, the number having been recorded in advance in the information-recording medium; and
   means for displaying images, the images being based on the image information, on displaying means in a slide displaying mode sequentially for each display duration, and for emitting musical-and-vocal sounds from a speaker, synchronizing the musical-and-vocal sounds with the slide displaying mode, the musical-and-vocal sounds being based on the musical-and-vocal information.
(9) A computer program to cause a computer to function as means for extracting phrase information from musical-and-vocal information recorded in advance in an information-recording medium, and as means for displaying images based on the image information on a displaying means for each phrase sequentially in a slide displaying mode, and emitting musical-and-vocal sounds from a speaker, synchronization the musical-and-vocal sounds with the slide displaying mode, the musical-and-vocal sounds being based on the musical-and-vocal information.
(10) A computer program to cause a computer to function as:
   a means for computing tempo information of a concerned musical piece from musical-and-vocal information recorded in advance in an information-recording medium; a means for setting the processing time period of a slide effect based on the tempo information; and a means for displaying images, the images being based on the image information, on displaying means in a slide displaying mode with a slide effect to be processed during the time period having been set based on the tempo information, and emitting musical-and-vocal sounds from a speaker, synchronizing the musical-and-vocal sounds with the slide displaying mode, the musical-and-vocal sounds being based on the musical-and-vocal information.

   In such a manner, a slide show execution program of the invention can reproduce image information provided by a customer and musical-and-vocal information selected by the customer in an order shop in a retail shop or the like, correlating them with each other, by analysis of the musical-and-vocal information and the image information, causing a feeling of unity between the image information and the musical-and-vocal information to extremely enhance the effects of a slide show, compared with a method of merely reproducing image information and musical-and-vocal information continuously, with no relationship therebetween. Further, in reproducing the slide show, it is possible to add a characterized symbol image, a visual background, and frames selected by the customer as well as to display a message input by the customer, adding value to the electronic album.
   Further, in an information-recording medium of the invention, there is recorded computer readably, not only image information and musical-and-vocal information, but also a electronic album reproducing program including a slide show execution'program, allowing a customer to view an electronic album by only inserting the information-recording medium into a PC. Still further, printing is performed on the surface of an information-recording medium or the jacket of a storage case so that recorded image information and musical-and-vocal information can be recognized, thereby adding commodity value to the information-recording medium, by which, not only can the customer enjoy himself/herself, but he/she can also use the information-recording medium for giving to an acquaintance or a friend.
(11) A computer readable information-recording medium in which recorded are image data obtained from a plurality of rolls of photographic film and/or a plurality of media, and a computer program to function as means for causing a computer to display an index image based on the image data on a display, the information-recording medium being characterized in that the computer program displays sheets that respectively correspond to the plurality of rolls of photographic film and/or the plurality of media on the display, and on each sheet, an index image based on image data obtained from a corresponding single roll of film or from a corresponding single medium is displayed.
   The media preferably include either an information-recording medium in which the image data are recorded or a digital camera storing the image data in a storage device.
   In the invention, said each sheet is preferably provided with a tag indicating information on the corresponding film or the medium.
   Further, in the invention, the tag preferably indicates at least one of information for identifying the type of media, namely photographic film or medium as stated above, or information for identifying the image data recorded in the photographic film or the medium, wherein the information for identifying the type, that is, photographic film or medium stated above, is an illustrated image of the photographic film or of the medium, and the information for identifying the image data recorded in the photographic film or in the medium can be implemented by including any of date-and-time information identifying the order data of the information-recording medium or the date of photography, the title indicating the content of image data recorded in the photograph film or medium, or an image data selected from the image data.
   Still further, in the invention, index image data for displaying the index image may have been recorded, or generated by the computer program.
(12) A method of producing an information-recording medium, comprising at least the steps of: a step of reading image data from a plurality of rolls of photographic film and/or a plurality of media provided by a customer; a step of recording a computer program to function as a means for causing a computer to display sheets which respectively correspond to the plurality of rolls of photographic film and/or the plurality of media on the display, and to display, on each sheet, an index image based on image data obtained from a corresponding single roll of photographic film or a corresponding single medium.

As stated above, in an information-recording medium of the invention, there are recorded image data obtained from a plurality of rolls of photographic film and/or a plurality of media, and a computer program to function as means for causing a computer to display an index image based on the image data on a display, wherein the computer program causes sheets to be displayed, the sheets respectively corresponding to the plurality of rolls of photographic film or the plurality of media, and each sheet includes an index image based on image data obtained from a corresponding single roll of photographic film or a corresponding single medium, and a tag that indicates the type provided by a customer, that is, a photographic film or a medium, and information indicating the content of the image data (the ordering date for producing the information-recording medium, date-and-time information of the data of photography and the like, the title of the photography, representative image data, etc.), thereby allowing the customer to visually select image data by looking at tags.

### BRIEF DESCRIPTION OF THE DRAWINGS

Fig. 1 is a diagram showing a structure of an electronic album ordering system according to a first embodiment of the invention;
Fig. 2 is a flowchart showing an ordering procedure of an electronic album according to the first embodiment of the invention;
Fig. 3 is a block diagram showing means which function by an electronic album reproduction program and slide show execution program according to the first embodiment of the invention;
Fig. 4 is a flowchart showing the processing procedure of the electronic album reproduction program according to the first embodiment of the invention;
Fig. 5 is a diagram showing an example of a screen structure (menu screen) displayed by the electronic album reproduction program according to the first embodiment of the invention;
Fig. 6 is a diagram showing an example of a screen structure (image processing screen) displayed by the electronic album reproduction program according to the first embodiment of the invention;
Fig. 7 is a diagram showing an example of a screen structure (brightness adjusting screen) displayed by the electronic album reproduction program according to the first embodiment of the invention;
Fig. 8 is a diagram showing an example of a screen structure (tone adjusting screen) displayed by the electronic album reproduction program according to the first embodiment of the invention;
Fig. 9 is a diagram showing an example of a screen structure (image size designation screen) displayed by the electronic album reproduction program according to the first embodiment of the invention;
Fig. 10 is a diagram showing an example of a screen structure (electronic mail creation screen) displayed by the electronic album reproduction program according to the first embodiment of the invention;
Fig. 11 is a diagram showing an example of a screen structure (musical piece selection screen) displayed by the electronic album reproduction program according to the first embodiment of the invention;
Fig. 12 is a diagram showing an example of a screen structure (slide effect setting screen) displayed by the electronic album reproduction program according to the first embodiment of the invention;
Fig. 13 is a diagram showing an example of a screen structure (image/message insertion screen) displayed by the electronic album reproduction program according to the first embodiment of the invention;
Fig. 14 is a diagram showing an electronic album ordering system according to a second embodiment of the invention;
Fig. 15 is a flowchart showing an ordering procedure of the electronic album according to the second embodiment of the invention;
Figs. 16a and 16b are diagrams showing display examples of an information-recording medium and a jacket according to the second embodiment of the invention;
Figs. 17a and 17b are diagrams showing examples of a display screen according to a third embodiment of the invention;
Figs. 18a to 18d are diagrams showing examples of a display screen according to the third embodiment of the invention;
Figs. 19a and 19b are diagrams showing examples of a display screen according to the third embodiment of the invention;
Fig. 20 is a diagram showing a structure example of a display screen according to the third embodiment of the invention;
Fig. 21 is a diagram showing a structure example of a display screen according to the third embodiment of the invention;
Fig. 22 is a diagram showing a structure example of a display screen according to the third embodiment of the invention; and
Fig. 23 is a diagram showing a screen structure example (slide effect confirmation screen) displayed by the-electronic album reproduction program according to the invention.

### BEST MODE FOR PRACTICING THE INVENTION

In a preferable mode of practicing the invention, on an information-recording medium according to the invention, a computer-readable set of image data provided by a customer, musical-and-voice data selected by the customer at an order shop in a retail store or the like, and a computer program for reproducing the image data and the musical-and-vocal data, correlating them with each other, is recorded; an indication is printed on the surface of the information-recording medium or the jacket of a storage case so that the recorded image data and musical-and-vocal data can be identified; and, in displaying the image data in an image display region for displaying an index image data (thumbnail image data) in an array, the image data are displayed on a sheet provided with a tag that clearly indicates the type of a photographic recording medium (a undeveloped negative film, a memory card, a CD-R, a digital camera, etc.) provided by the customer and the content of the photographic recording medium. Therefore, selectability of image data is extremely enhanced by using tags.

### [Embodiments]

To explain the abovementioned mode of practicing the invention with further details, some embodiments of the invention will now be described, referring to the drawings.

### [Embodiment 1]

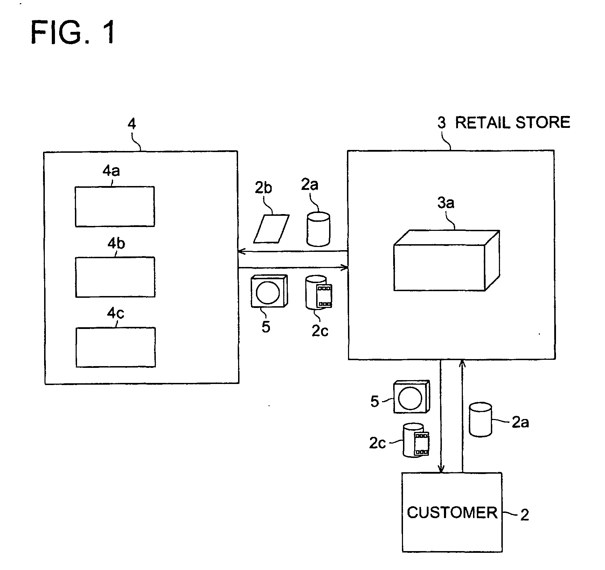

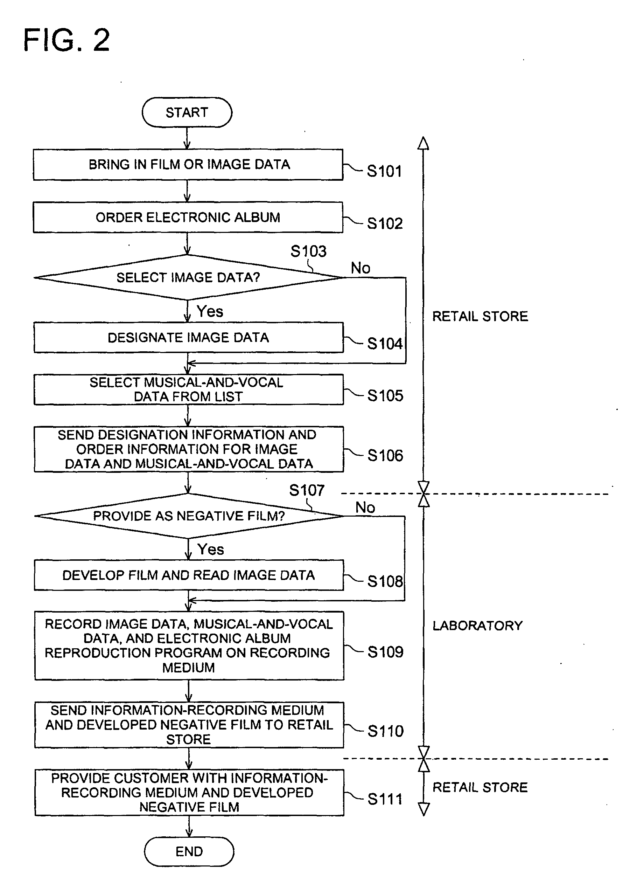

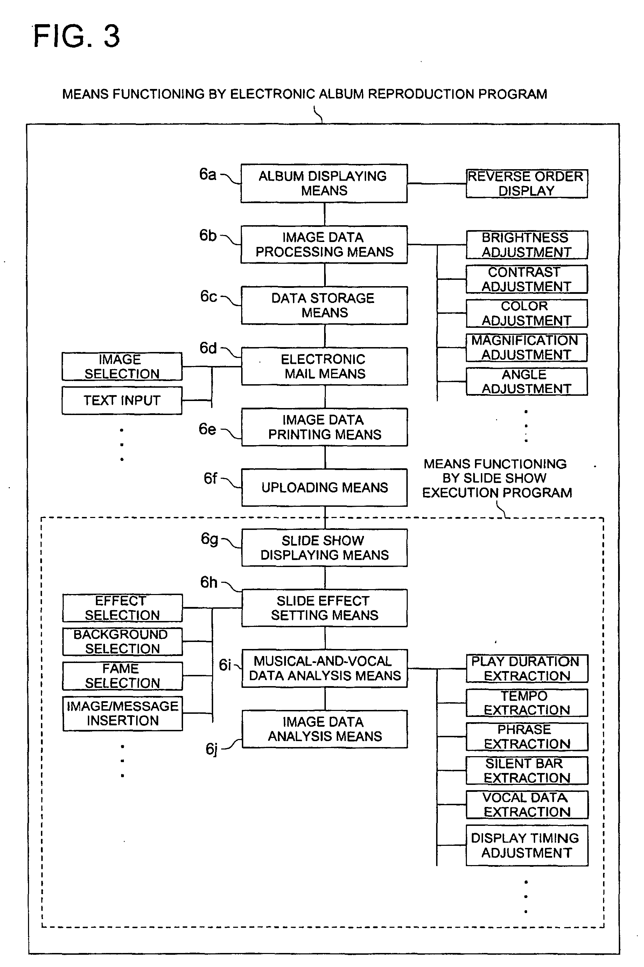

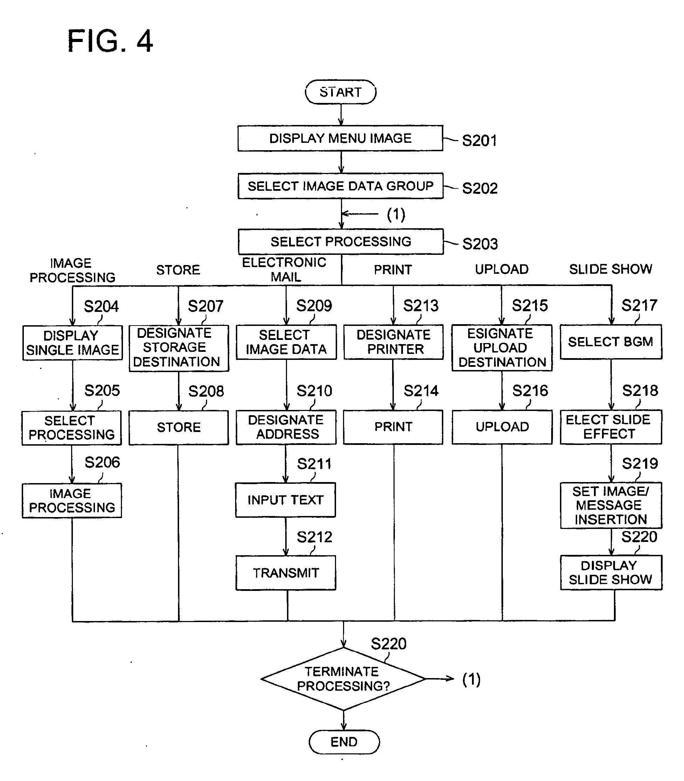

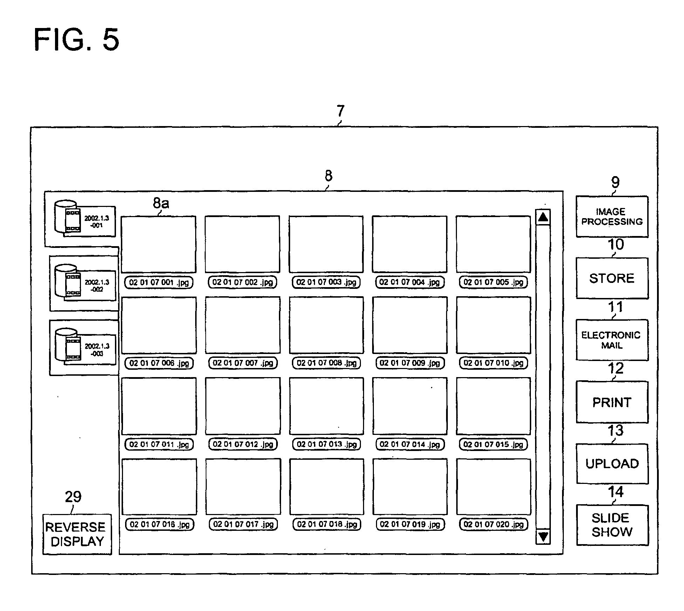

First, an information-recording medium in which an electronic album according to a first embodiment of the invention is recorded, and a slide show execution program, will be described, referring to Figs. 1 through 13. Fig. 1 is a diagram showing a structure of an electronic album ordering system according to the first embodiment of the invention, and Fig. 2 is a flowchart showing an ordering procedure of an electronic album. Fig. 3 is a block diagram showing means that function by an electronic album reproduction program (a slide show execution program), and Fig. 4 is a flowchart showing the processing procedure of the program. Figs. 5 to 13 are diagrams showing examples of screen structures displayed by the program. A slide show performed according to the invention sequentially displays each image data recorded in the information-recording medium as static images, excluding forms in which image data are continuously displayed as a dynamic image as in the case of a video movie.

As shown in Fig. 1, electronic album ordering system 1 of the present embodiment is implemented by: customer 2 who provides image data; an order shop in retail store 3 or the like who places an order of an electronic album, selects musical-and-vocal data to be reproduced in synchronization with the image data, and returns developed negative film 2c to the customer; and laboratory 4 which receives the image data and designation information for musical-and-vocal data from the retail store 3, writes the image data, the musical-and-vocal data, and the electronic reproduction program in a set in information-recording medium 5 such as a CD-R in a computer-readable state, and thus produces an electronic album. The laboratory 4 is provided with a developing device 4a for developing the undeveloped negative film 2a provided by the customer 2, reading device 4b that reads the developed photographs and converts them into digital data, and a writing device 4c for writing data and computer programs in the information-recording medium 5. The respective devices stated above may be arranged separately, and it is also allowed to make an integral arrangement of a pair of the developing device 4a and the reading device 4b, a pair of the reading device 4b and the writing device 4c, or a set of the developing device 4a, the reading device 4b, and the writing device 4c. Further, a printer may be provided for producing common prints based on image data read by the reading device 4b. There is no particular limitation on the type of printer, allowing it to use an inkjet type, an electrophotographic type, a silver halide type, and others.

In the following description, although a description will be made, taking the case of ordering an electronic album at retail store 3, the order shop is not limited to the retail store 3, and can be any arbitrary shop which receives orders for developing of films and printing. As for the customer 2, a case of providing image data as undeveloped negative film 2a will be mainly described, but it is also possible to provide a developed negative film, a positive film (developed or undeveloped), information-recording media including memory cards such as a CompactFlash®, a SmartMedia, a MemoryStick®, a MultiMediaCard, a SDMemoryCard, or a CD-R (hereinafter, wall will be referred to merely as an information-recording medium), in which image data obtained from prints or a digital camera is recorded.

Referring to a flowchart in Fig. 2, it will be described on the procedure, of the electronic album ordering system 1 arranged as above, from the time the customer 2 provides image data to the time the customer 2 obtains information-recording medium 5 in which an electronic album has been recorded.

First, in step S101, the customer 2 brings undeveloped negative film 2a having been photographed with a film camera into an order shop in retail store 3 or the like.
Photographic images recorded in this undeveloped negative film 2a may, of course, be the customer's own photography or another customer's. Further, the image data is not limited to photographic images obtained by photographing with a camera, but may be image data obtained through communication networks such as the Internet or image data having been processed by the customer, using image processing software.

Next, in step S102, the customer 2 places an order of an electronic album at counter 3a, and writes information for identifying the customer 2 and additional information such as a message or the like to be displayed together with the image data, if necessary, in order sheet 2b in a predetermined format. When the customer 2 brings in undeveloped negative film 2a, all the photographs recorded in the undeveloped negative film 2a are usually used for the electronic album, but when the customer 2 brings in a developed negative film or an information-recording medium, it is possible to use only a part of the recorded photographs. In case when the customer 2 performs selection of image data in step S103, the customer 2 selects image data to be used for the electronic album, designating exposure numbers of the developed negative film or file names in the information-recording medium.

Next, in step S105, the customer 2 selects musical-and-vocal data to be played as BGM of a slide show. In the present embodiment, musical-and-vocal data is stored in the laboratory 4, and the retail store 3 prepares a list of available musical-and-vocal data at the counter 3a so that the customer 2 designates desired musical pieces from the list. The musical-and-vocal data is not limited to that prepared in the retail store 3, and the customer 2 may bring and provide musical-and-vocal data in a predetermined format, or use musical-and-vocal data that the customer 2 has made himself/herself as BGM.

Then, in step S106, the retail store 3 sends the undeveloped negative film 2a that the customer 2 has brought in, designation information on the musical-and-vocal data that the customer 2 selected, together with the order sheet 2b to the laboratory 4. As a method of sending these to the laboratory 4, when the photographic images are provided as' undeveloped negative film 2a, the undeveloped negative film 2a, the designation information on the musical-and-vocal data, and the order sheet 2b may be sent to the laboratory 4 by post mail, or a collection and delivery service, and when the photographic images are provided as digital data, the image data, the designation information on the musical-and-vocal data, and information on the order sheet may be transmitted via the Internet or communication networks such as a private line.

Then, the laboratory 4 which has received the undeveloped negative film 2a, the designation information on the musical-and-vocal data, and the order sheet 2b, makes an electronic album provided with an electronic album reproduction program (specific functions and operations of which will be described later) including a slide show execution program therein that synchronizes the image data with the musical-and-vocal data and displays/plays them, which is a characteristic of the invention. In this situation, when the image data is received as the undeveloped negative film 2a in step S107, the developing device 4a is used to develop the negative film, and the negative film is converted into digital data, using the reading device 4b such as a scanner or the like. When the image data is received as a developed negative film, the negative film is converted into digital data, using the reading device 4b.

Then, in step S108, the image data read by the reading device 4b or the image data recorded in an information-recording medium, the designated musical-and-vocal data, and the electronic album reproduction program are written in the information-recording medium 5 such as a CD-R in a computer readable state to make the electric album. If the customer 2 has added a message to be displayed together with the image data, the additional information is also written in the information-recording medium 5. The information-recording medium is not limited to a CD-R, but any medium readable by a terminal such as a PC may be used, including a DVD-R, MO, etc., and, a CD-R is most preferable because it is computer readable and inexpensive.

Next, in step S110, the laboratory 4 sends the information-recording medium 5 in which the image data, the musical-and-vocal data, and the electronic album reproduction program are recorded, and the developed negative film 2c, to the retail store 3, and then, in step S110, the retail store 3 provides them to the customer 2.

As stated above, an electronic album produced by the system of the present embodiment is different from an electronic album provided with conventional slide show functions, in that, in addition to image data and musical-and vocal data to be played as BGM, an electronic album reproduction program for displaying/playing of the image data and the musical-and-vocal data, correlating them with each other, is computer readably recorded in the information-recording medium 5. Therefore, the customer 2 can enjoy a slide show reproduced with the integration of the image data and the musical-and-vocal data just by inserting the information-recording medium 5 into a PC or the like.

Referring to Figs. 3 to 13, functions and operations of the electronic album reproduction program, and the slide show execution program of the present embodiment, will be now described below.

As shown in Fig. 3, the electronic album reproduction program of the present embodiment functions as: album displaying means 6a for displaying a plurality of image data, provided by the customer 2, being compressed in an album form; image data processing means 6b for various image processing on each individual image data; data storage means 6c for recording designated image data and musical-and-vocal data on a hard disk or another type of information-recording medium; electronic mail means 6d for transmitting an electronic mail with designated image data as an attached file; image data printing means 6e for printing out designated image data; uploading means 6f for uploading designated image data onto a server; slide show displaying means 6g for displaying image data and musical-and-vocal data, correlating them with each other, in a slide displaying mode; slide effect setting means 6h for setting slide effects; musical-and-vocal data analysis program 6i for analyzing musical-and-vocal data to adjust display timing of image data; and image data analysis program 6j for analyzing image data, extracting characteristics thereof, and selecting musical-and-vocal data suitable for the image data.

The electronic album reproduction program of the present embodiment is not required to cause a computer to function as all of these means, wherein the electronic album reproduction program, to be used as a slide show execution program, is required, as a minimum requirement, to cause the computer to function as the slide show displaying means 6g, the slide effect setting means 6h, and the musical-and-vocal data analysis program 6i, and it is also allowed to arrange the electronic album reproduction program to cause the computer to function as other known means.

The operations of the electronic album reproduction program and the slide show execution program will be described below, referring to the flowchart in Fig. 4 and the examples of screen structures in Figs. 5 to 13.

First, in step S201, when the customer 2 inserts the information-recording medium 5 in which an electronic album of the present embodiment is recorded, into a terminal such as a PC, the electronic album reproduction program automatically starts, and menu screen 7 as shown in Fig. 5 is displayed. The menu screen 7 displays, for example, image data groups 8 (three image data groups are displayed in the figure.) each of which is an aggregation of individual exposure image data 8a of undeveloped negative film 2a, and switches 9 to 14 that clearly indicate processes to be performed on a selected image data group 8 and individual exposure image data 8a. On each image data group 8 and individual exposure image data 8a, numbers that include a date of photography or an order date, and a sequential serial number are described to enable identification of each image data group 8 and individual exposure image data 8a.

Then, in step S202, when the customer 2 selects a desired image data group 8 from the image data groups 8, an album of the individual exposure image data 8a of the selected image data group 8 is displayed, wherein the individual exposure image data 8a are arranged in a reduced layout. Although the album has a layout in 5 rows in Fig. 5, the layout format of the album is not limited to the arrangement shown in the figure, and the number of display can be increased or decreased, by reducing or enlarging the size of individual exposure image data 8a depending on the desire of the customer 2.

Next, in step S203, the customer 2 selects a process to be performed on the displayed image data group 8 and individual exposure image data 8a, and clicks a corresponding one of the switches 9 to 14 by a mouse. In the present embodiment, as processes to be performed on image data, although 6 processes, that is, image processing, storing, electronic mailing, printing, uploading, and slide show, are shown, the illustration in the figure is only examples, and other processes not described above may also be performed, as well as allowing omission of processes except the slide show. In the following description, the content of each process will be described in the order shown in the illustration. It will be described here on the case where, when the electronic album reproduction program starts, the menu screen 7 automatically starts, but the operation may be arranged such that the slide show execution program directly starts when the information-recording medium 5 is inserted, and a menu program starts when an arbitrary key or a designated key is pressed, or overall reproduction is terminated.

With some cameras for photographing on a film, photography is performed starting from the last exposure after the roll of film is wound up, and in the case of an image data group 8 having been produced by scanning of a negative film on which photography has been performed with such a camera, individual exposure image data 8a are displayed in the sequential order starting from the last photographed image. Since it is usually preferable that images are in the order starting form older ones in a time series, the order of displaying the images needs to be reversed. In this case, when a reverse order display icon 29 is pressed, the icon being an information input icon for reversing the order of displaying of images to be displayed in a slide displaying mode, the images are displayed again in a reversed order so that the images are displayed starting from the exposure having been photographed first in terms of time.

### (Image Processing)

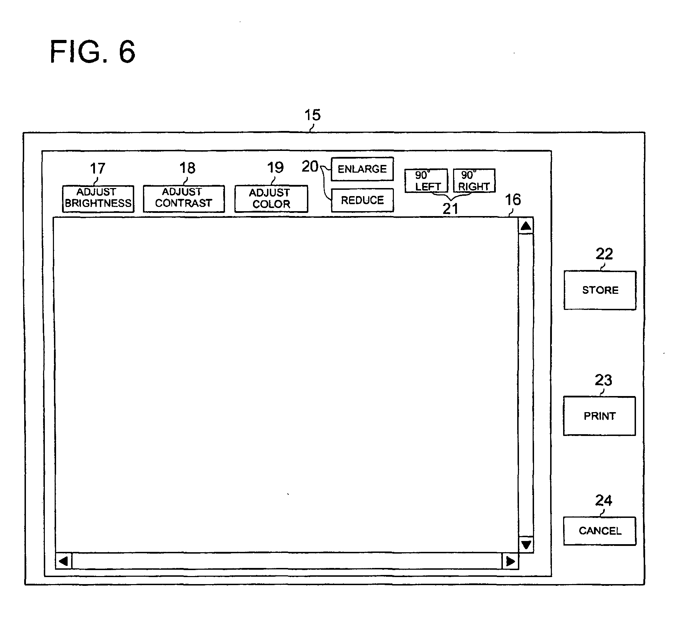

When, for example, an individual exposure image data 8a is selected from an image data group 8, and thereafter "Image Processing" is selected in step S203, then image processing screen 15, as shown in Fig. 6, is displayed in step S204. The image processing screen 15 displays, for example, an individual exposure image data display region 16 for an original sized or enlarged display of the selected individual exposure image data 8a, switches 17 to 21 for performing various image processing, a "Store" switch 22, a "Print" switch 23, and a "Cancel" switch 24 for returning to the menu screen 7.

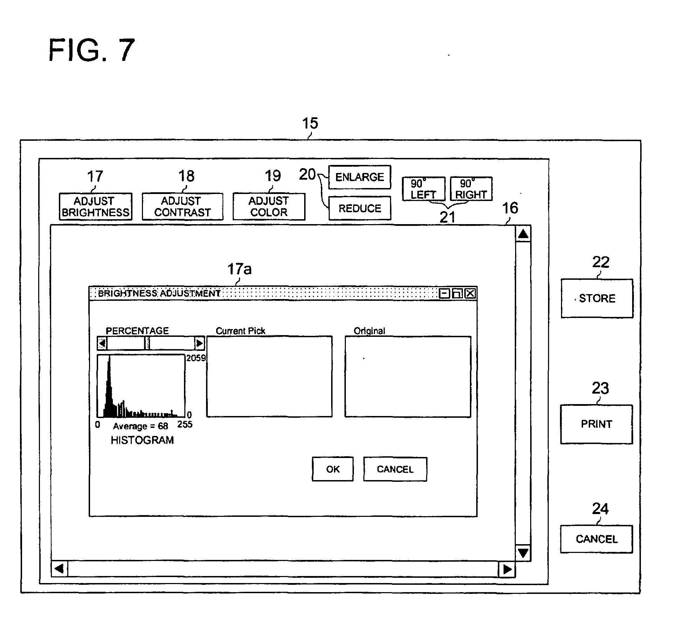

For example, in case of adjusting the brightness of the exposure image data 8a in step S205, when "Brightness Adjust" switch 17 is pressed, then brightness adjustment screen 17a, as shown in Fig. 7, is superimposed on the image processing screen 15, and thus displayed. This brightness adjustment screen 17a, for example, displays a region to display original image data, a region to display image data having been adjusted, a brightness adjustment section, and a region to display the brightness degree of each pixel of the image data, in histogram form, wherein the customer 2 can adjust the image data to a desired brightness by operating the brightness adjustment section while confirming the image having been adjusted and the histogram (step S206).

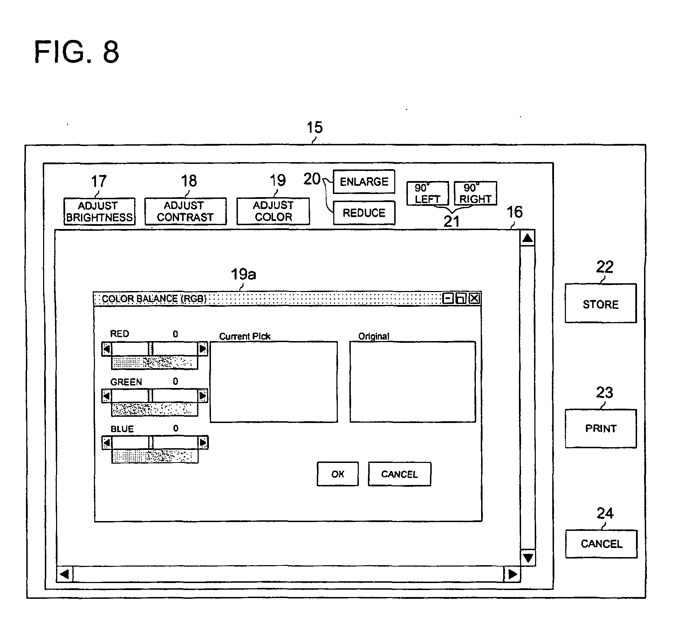

Further, in case of adjusting the color of the exposure image data 8a in step S205, when "Color Adjustment" switch 19 is pressed, color adjustment screen 19a as shown in Fig. 8 is superimposed on the image processing screen 15, and thus displayed. This color adjustment screen 19a displays, for example, a region to display the original image data, a region to display image data having been adjusted, and a color adjustment section of the respective colors RGB, wherein the customer 2 can adjust the image data to desired colors by operating the color adjustment section of the respective colors RGB while confirming the image which has been adjusted.

### (Storing)

When an individual exposure image data 8a is selected from an image data group 8, and thereafter "Storing" is selected in step S203, a screen (not shown) to select a directory to be a storage destination is displayed on the menu screen 7, and when the customer 2 designates a storage destination of the image data, such as a hard disk, in step S207, then the selected image data is stored in the designated directory (step S208).

### (Electronic Mail)

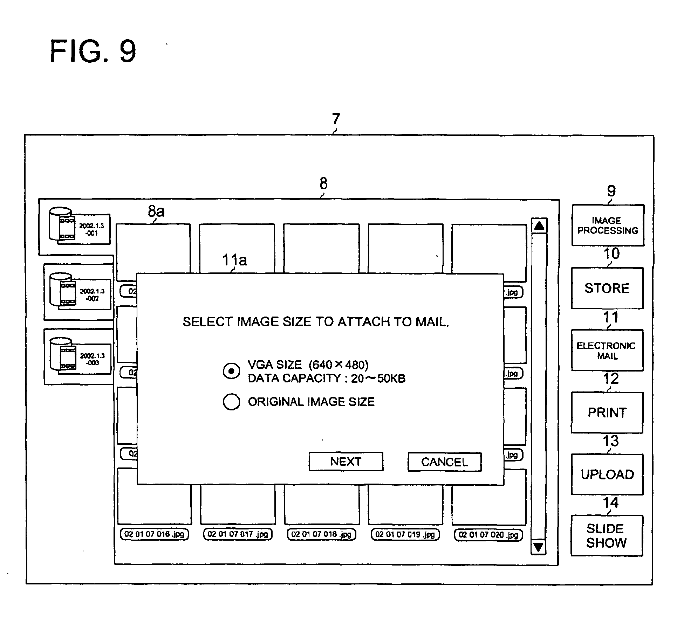

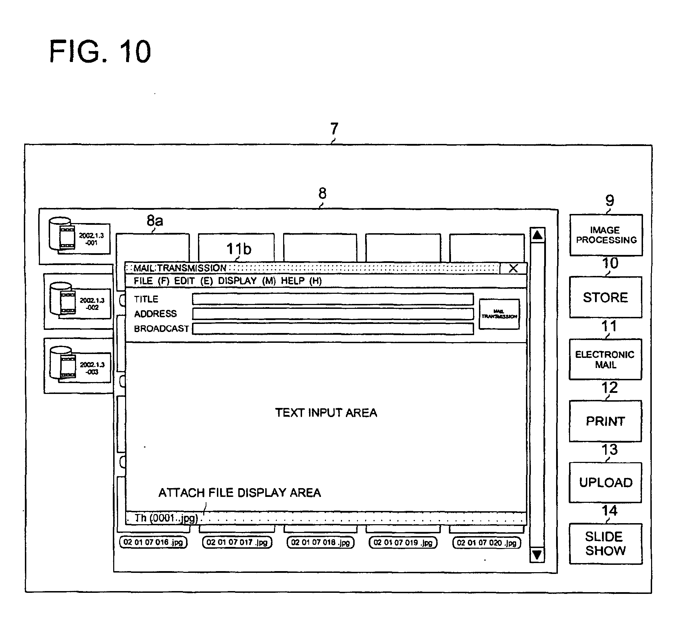

When an individual exposure image data 8a is selected from an image data group 8, and thereafter "Electronic Mail" is selected in step S203, image size designation screen 11a, as shown in Fig. 9, is displayed on the menu screen 7. The image size designation screen 11a is arranged such that, for example, the size (for example, a VGA size or an original image size) of the image data to be attached to an electronic mail can be selected, and when the customer 2 designates a desired image size and presses "Next", in step S209, electronic mail producing screen 11b, as shown in Fig. 10, is displayed on the menu screen 7. This electronic mail producing screen 11b displays, for example, a region to input the title, the address, broadcast mailing, etc. of the electronic mail, a region to input the text of the mail, and a region to indicate the file name of the attached individual exposure image data 8a. When an address, text, etc. are input in steps S210 and S211 and a "Mail Send" switch is pressed, the electronic mail attached with the selected image data is sent to the designated address (step S212).

### (Print)

When an individual exposure image data 8a is selected from an image data group 8, and thereafter "Print" is selected in step S203, a screen (not shown) to select a printer for output is displayed on the menu screen 7, and when the customer 2 designates a printer in step S213, the selected image data is printed out on the designated printer (step S214).

### (Uploading)

When an exposure image data 8a is selected from an image data group 8, and thereafter "Upload" is selected in step S203, a screen (not shown) to select a server to be an upload destination is displayed on the menu screen 7, and when the customer 2 designates a server to be the upload destination in step S215, the selected image data is uploaded to the designated server (step S216).

### (Slide Show)

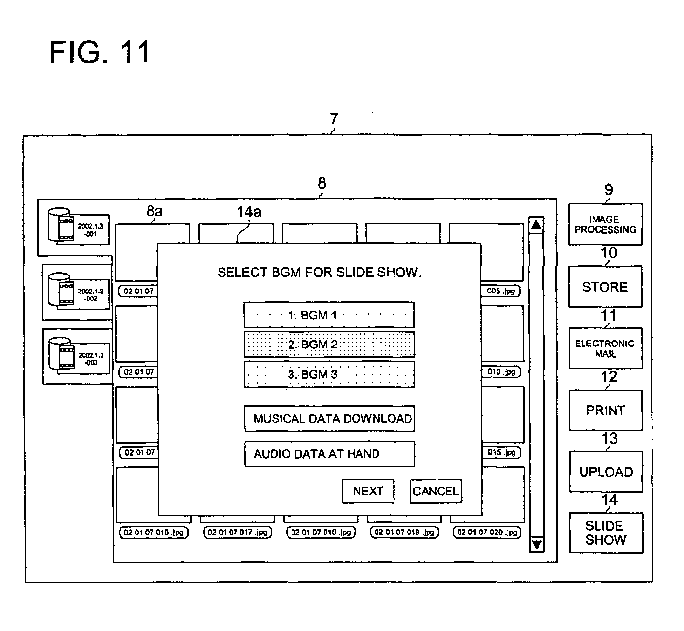

When an image data group 8 or an individual exposure image data 8a from the image data group 8 is selected, and thereafter "Slide Show" is selected in step S203, then musical piece selection screen 14a, as shown in Fig. 11, to select musical-and-vocal data to be played as BGM of a slide show is displayed on the menu screen 7. This musical piece selection screen 14a displays, for example, switches (BGM 1 to 3 in the figure) that indicate musical-and-vocal data which the customer 2 has selected at the order shop in the retail store 3 or the like, or the customer 2 has provided, a switch that is used to download musical-and-vocal data through the Internet, and a switch that is used to select musical-and-vocal data which is stored in a PC by the customer 2, while the customer 2 selects desired musical-and-vocal data from these in step S217.

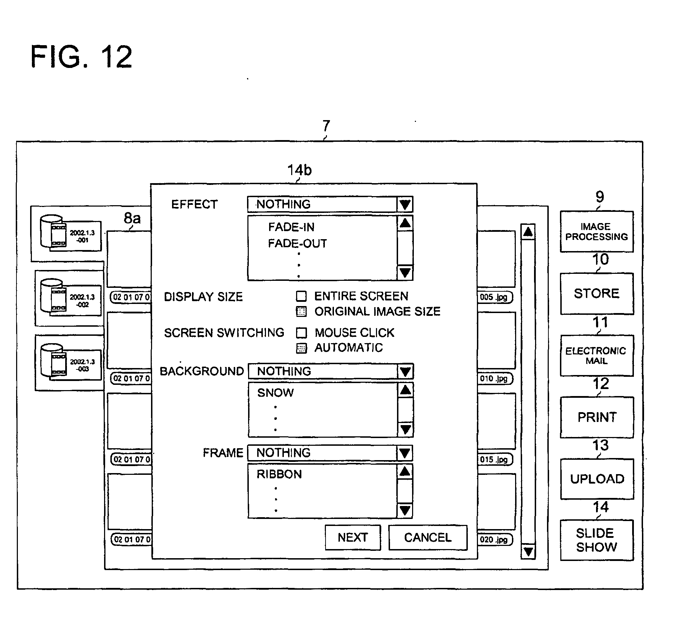

When the customer 2 selects a piece of musical-and-vocal data and presses switch "Next", the menu screen 7 displays slide effect setting screen 14b, as shown in Fig. 12, in step S218. This slide effect setting screen 14b displays, for example, an "Effect" column to set a method for display/erasure of image data, a "Display Size" column to set a display size of image data, a "Screen Switch" column to set a method of switching the screen, a "Background" column to set the background screen of a slide, and a "Frame" column to set a frame to be added to image data.

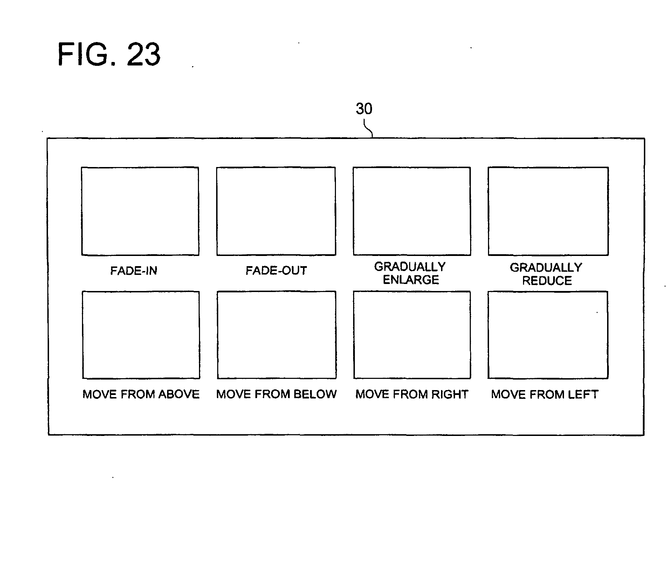

As "effects", arbitrary known processes are included such as a fade-in/ fade-out process that gradually displays/erases image data, a process to gradually enlarge/reduce image data, and a process to move image data up or down, and left or right on the screen, wherein a desired effect is selected from these effects. As for the means for setting an "effect", setting an "effect" in a way more understandable to the customer 2 can be attained by performing a preview display for the effect of switching the slide of an image displayed in the slide displaying mode and thereafter setting an "effect" desired by the customer 2. For example, the customer 2 may easily and practically confirm the effect of switching a slide by viewing a screen (for example, displaying in a size 400 x 300 instead of an actual screen size, for example, of 800 x 600) smaller than a screen for actual display in the slide displaying mode as a slide show; or the customer 2 may select a desired effect through actual display of a plurality of effects of switching a slide, as shown in Fig. 23. Further, as for "display size", there are a mode for display on the entire screen and a mode for display with the size of image data as it is. Regarding "screen switching", there are a mode for switching a screen with a customer's operation of a mouse, and a mode for automatic switching at a timing having been set with a musical-and-vocal data analysis means 6i, described later, from which an arbitrary mode is selected.

Further, it is also possible to set a background screen and provide decoration on the outer frame of image data, wherein the customer 2 selects a desired item from backgrounds and frames displayed on a pull-down menu. For example, when "Snow" is selected as a background, a screen with a snowy background screen of image data is displayed, and when "Ribbon" is selected as a frame, a screen is displayed, added with a ribbon on the outer frame of image data, by which effects of a slide show are enhanced. Incidentally, for slide effects herein, representative effects (for example, fade-in/fade-out for "Effect", original image size for "Display Size", automatic for "Screen Switching", nothing for "Background" and "Frame") are set as defaults, and the slide effect setting screen 14b may be displayed only in the case of changing an effect. These items are only examples, and any combination of the abovementioned items and combinations with other effects are allowed.

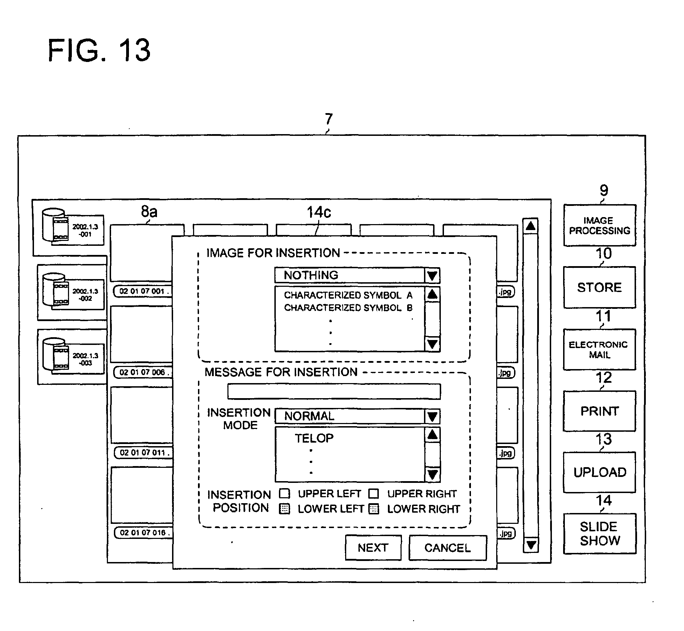

Next, when the customer 2 presses the switch "Next" after setting a slide effect, insertion screen 14c for insertion of an image and message, as shown in Fig. 13, is displayed on the menu screen 7 in step S219. This image/message insertion screen 14c displays, for example, an "Image Insertion" column to select an image to insert, a column to input a message to insert, an "Insertion Mode" column to select a mode to insert a message, and an "Insertion Position" column to select a position to insert the message.

This image/message insertion screen 14c is provided also to enhance the effects of a slide show, and, for example, in the case of selecting the theme song of a movie or an animation as musical-and-vocal data, the names of characterized symbols or the like corresponding to the musical-and-vocal data are displayed on the pull-down menu in the "Image for Insertion" column, which makes it possible to display a characterized symbol together with image data in a slide show by selecting an image from them, creating a feeling of unity between the played musical piece and the display screen.

Further, by inputting a message in a message input column and setting an insertion mode and an insertion position, the input message can be displayed in a telop together with display of image data and at a designated position on the screen, which increases the variety of customization, thereby enabling production of an electronic album responding to desires of a customer. Further, by describing additional information such as a message at the time of ordering an electronic album in step S102, this message can be displayed in the message input column, and, in case of giving the information-recording medium 5 of the present embodiment to an acquaintance or a friend, it is allowed to display, in a slide show, a message to the person who receives the gift, thus adding a commodity value to the information-recording medium 5.

With regard to insertion of an image or a message, no insertion of image/message can be set as a default value, allowing display of the image/message insertion screen 14c only in the case when insertion of an image or a message is desired. It is not always necessary to set a slide effect or insert an image/message, which allows it to start a slide show just after a selection of musical-vocal data, in a case where a slide show is selected in step S203.

When selection of musical-and-vocal data, selection of a slide effect, and setting of image/message are terminated, the image data group 8 or selected individual exposure image data 8a are displayed in step S220 in the slide displaying mode, and the selected musical-and-vocal data is played together as BGM.

The electronic album reproduction program, of the present embodiment, not only displays image data and plays musical-and-vocal data, but comprises a slide show execution program to let the timing of displaying image data and the timing of playing musical-and-vocal have the following predetermined relationship, thereby increasing the effects of a slide show.

Specifically, the slide show execution program can cause a computer function as musical-and-vocal data analysis means 6i that computes the play duration of musical-and-vocal data, extracts the tempo, phrases, vocal data, and silent bars of musical-and-vocal data, and sets display timing of image data, and as image data analysis means 6j that extracts specific shapes and colors from the image data, and selects musical-and vocal data suitable for the image data, referring to the characteristics of the image data.

Thus, for example, the play duration of musical-and-vocal data is extracted from the format, the size, and the header information of the musical-and-vocal data, computes display duration per single image data by dividing the play duration by the number of image data to be displayed so that display of the image data terminates simultaneously with the termination of play of the musical-and-vocal data, or display of image data terminates simultaneously with the termination of play of a plurality of musical-and-vocal data.

Further, it is also possible to extract the tempo of a musical-and-vocal data according to the dynamics, the frequencies, etc. of a musical-and-vocal data, and to set the duration of slide effects (for example, the duration of fade-in/fade-out) to be matched with the tempo of the musical-and-vocal data, wherein a slide effect is set with a short duration for a musical piece with a fast tempo, and with a long duration for a musical piece with a slow tempo, thereby enabling matching between the tempo of a musical piece and a slide effect.

Still further, it is also possible to extract vocal data and silent bars of a musical-and-vocal data according to the dynamics, frequencies, and the like of the musical-and-vocal data and divide the musical piece into individual phrases, allowing, for example, to set a slide show so that each individual image data is displayed for each individual phrase, thereby synchronizing a phrase of the musical-and-vocal data and the display of the image data, which creates a feeling of unity between the musical piece and the images and increases the effects of a slide show.

Yet further, it is also possible to extract specific shapes and colors from image data by performing image processing on the image data, thus guess the scene of photography, and select musical-and-voice data, matching with the scene, from musical-and-vocal data recorded in advance, thereby allowing enjoyment of a slide show in which a suitable musical piece is played as BGM even if the customer 2 does not make selection of musical-and-vocal data.

As has been described, the slide show execution program of the present embodiment, not only displays image data and simultaneously plays musical-and-vocal data, but also sets display duration of image data and the duration of slide effects in synchronization with play duration, tempos, and phrases of musical pieces, and thus the effects of a slide show are greatly enhanced, compared with conventional slide shows. Further, in the information-recording medium 5 of the present embodiment, not only image data and musical-and-vocal data to be used for a slide show, but also an electronic album reproduction program are written in a computer readable state, and thus the customer 2 can easily view the electronic album and enjoy a slide show, just by inserting the information-recording medium 5 into a terminal such as a PC.

Further, with the information-recording medium 5 of the present embodiment, messages that the customer 2 described at the time of ordering an electronic album and characterized symbols that were registered corresponding to musical-and-vocal data, as necessary, are reproduced along with image data, which further increases the feeling of unity between the image data and the musical-and-vocal data, and the value in offering the information-recording medium 5 of the present embodiment as a gift is increased by being able to display a message addressed to a specific person.

### [Embodiment 2]

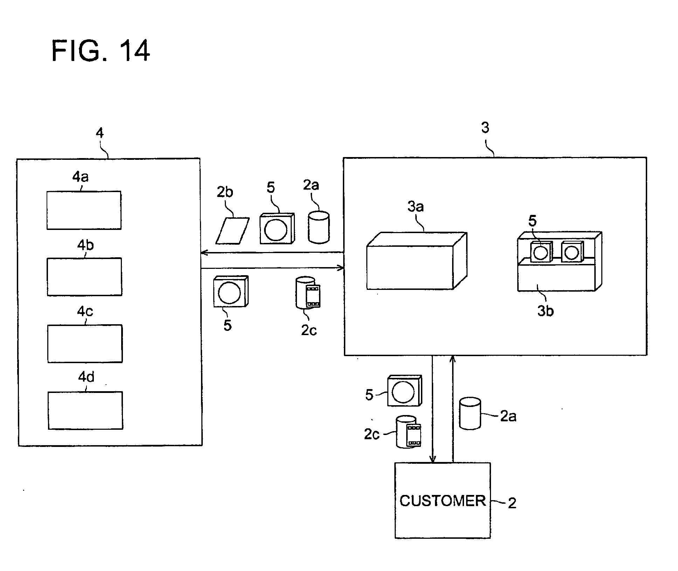

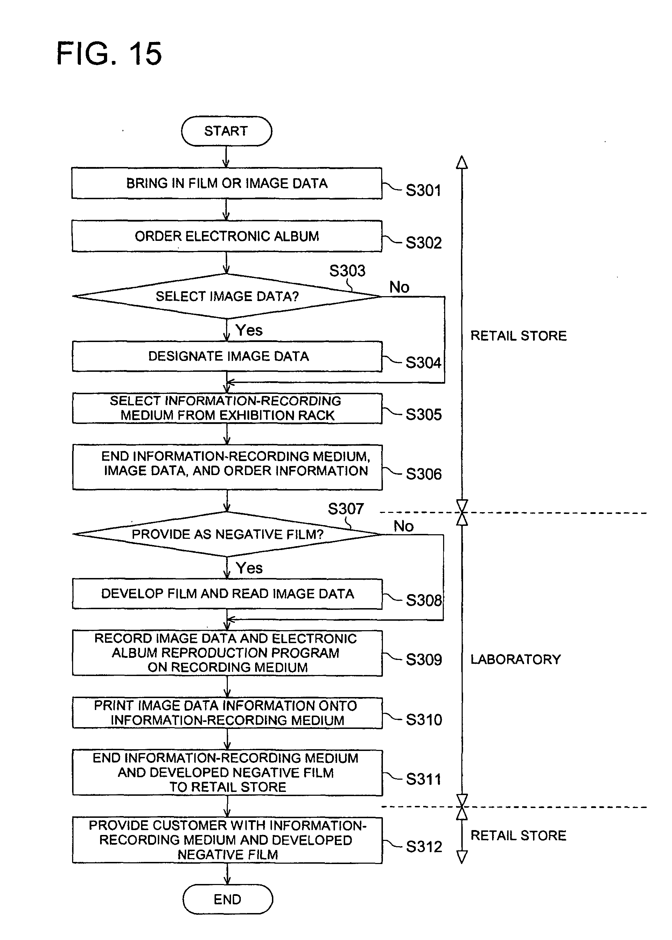

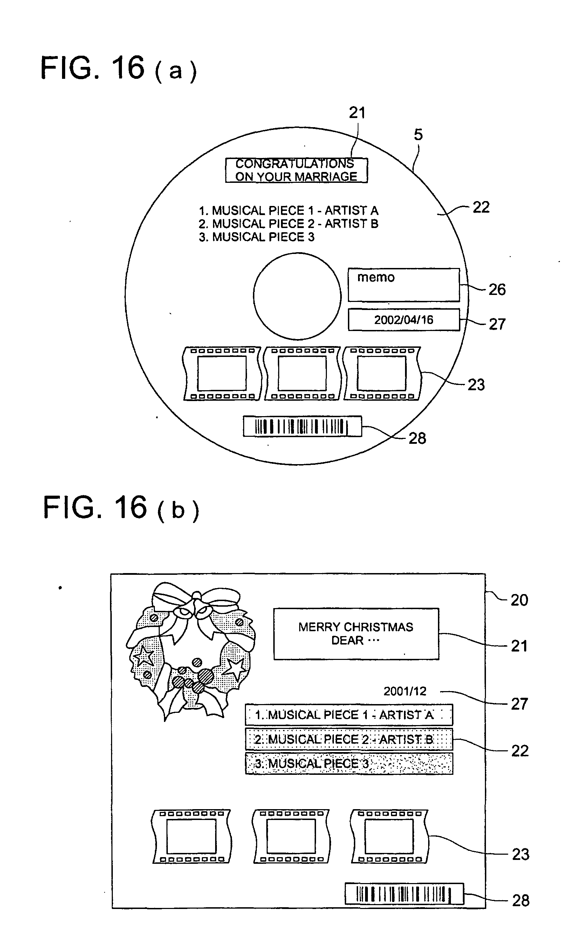

Next, an information-recording medium, in which an electronic album according to a second embodiment of the invention is recorded, will be described, referring to Figs. 14 to 16. Fig. 14 is a diagram showing a structure of an electronic album ordering system according to a second embodiment of the invention; Fig. 15 is a flowchart showing an ordering procedure of the electronic album; and Figs. 16A and 16B are diagrams showing display examples of an information-recording medium and a jacket produced by a system of the present embodiment.

In the first embodiment described above, only image data, musical-and-vocal data, and a computer program for reproducing and ordering them are written in the information-recording medium 5, but the present embodiment is characterized in that, in order to increase the value of the information-recording medium 5 itself and indicate recorded image data and musical-and-vocal data, predetermined printing is performed on the surface of the information-recording medium 5 or the jacket of a storage case for containing the information-recording medium 5.

In description of the present system, referring to Fig. 14, an electronic album order system 1 of the present embodiment comprises customer 2 who provides image data, an order shop, in retail store 3 or the like, which exhibits information-recording media 5 having recorded in advance musical-and-vocal data and having been subjected to printing, on the surface of the medium or the jacket of a storage case thereof that allows to identify musical-and-vocal data, and laboratory 4 that receives, from the retail store 3, the image data and the information-recording medium 5, and writes, computer readably, the image data and an electronic album reproduction program on the information-recording medium 5. The retail store 3 is provided with counter 3a that receives the image data from the customer 2, receives an order for an electronic album, and returns developed negative film 2c to the customer, and also exhibition rack 3b that exhibits the information-recording media 5 in which musical-and-audio data is recorded, while the laboratory 4 is provided with developing device 4a that develops undeveloped negative film 2a provided by the customer 2, reading device 4b that reads the developed photographs and converts them into digital data, writing device 4c that writes data and computer programs to the information-recording medium 5, and printing device 4d that performs printing to allow identifying each image data. The respective devices stated above may be arranged separately, and it is also allowed to make an integral arrangement of a pair of the developing device 4a and the reading device 4b, a pair of the reading device 4b and the writing device 4c, a set of the developing device 4a, the reading device 4b, and the writing device 4c, or a set of the developing device 4a, the reading device 4b, the writing device 4c, and the printing device 4d. Further, an arbitrary printer that makes common prints based on image data read by the reading device 4b may be provided, including an inkjet type, an electrophotographic type, a silver halide type, and others.

Referring to the flowchart in Fig. 15, described will be the procedure, on the electronic album ordering system 1 arranged as above, from the time the customer 2 provides image data to the time the customer 2 obtains information-recording medium 5 in which an electronic album is recorded. Although, in the following description, it is assumed that musical-and-vocal data is recorded in advance in the information-recording medium 5 exhibited in the retail store 3, it is also allowed that only printing is performed with the information-recording medium 5 and recording of musical-and-vocal data is carried out in the laboratory 4. The same as in the first embodiment stated above, the image data may be provided with a developed negative film or an information-recording medium instead of providing it with undeveloped negative film 2a.

First, the same as in the first embodiment, in step S301, the customer 2 brings an undeveloped negative film 2a having been photographed with a film camera into an order shop in a retail store 3 or the like. In step S302, the customer 2 places an order of an electronic album having been brought in by the customer 2, and writes, on order sheet 2b in a predetermined format, information that identifies the customer 2 as well as additional information such as a message to be displayed together with the image data. Further, the customer 2 may add a message to be printed on the information-recording medium 5 or on a jacket and/or information that identifies the customer to be provided with the information-recording medium 5, and the like. Next, in the case of selecting image data in step S303, the customer 2 selects image data to be used for the electronic album, designating exposure numbers of a developed negative film or file names in the information-recording medium in step S304.

Next, in step S305, the customer 2 selects musical-and-vocal data to be played, as BGM of the electronic album, wherein, in the present embodiment, information-recording media 5 in which only musical-and-vocal data is written are exhibited on the exhibition rack 3b in the retail store 3, and the customer 2 selects a desired information-recording medium 5 from among them. Incidentally, as shown in Figs. 16a and 16b, the information-recording medium 5 is preferably printed with music titles/artist names 22on the surface thereof opposite the data writing surface or on the jacket of a storage case in the case of a CD-R for example, to indicate contained musical-and-vocal data therein. In this situation, in addition to the classification of the musical-and-vocal data (the names of musical pieces and artists), designs that increase commodity value may also be printed.

Then, in step S306, the retail store 3 sends the undeveloped negative film 2a the customer 2 has brought in, the information-recording medium 5 having been selected by the customer, and the order sheet 2b, to the laboratory 4. In case the customer 2 has provided the image data in the form of digital data, the retail store 3 may write the image data onto the information-recording medium 5 that the customer 2 has selected.

Then, the laboratory 4 which has received the undeveloped negative film 2a, the information-recording medium 5 in which musical-and-vocal data is recorded, and the order sheet 2b, produces an electronic album provided with an electronic album reproduction program that contains a slide show execution program described in the first embodiment. In this occasion, when the image data is received as an undeveloped negative film 2a in step S307, the developing device 4a is used to develop the negative film, and the negative film is converted into digital data, using the reading device 4b such as a scanner or the like. When the image data is received as a developed negative film, the negative film is converted into digital data, using the reading device 4b.

Then, in step S308, the image data read by the reading device 4b or the image data recorded in the information-recording medium, and the electronic album reproduction program are written onto the information-recording medium 5 selected by the customer 2 in a computer readable state to produce the electric album. If the customer 2 adds a message to be displayed together with the image data, the additional information is also written in the information-recording medium 5.

Next, in step S310, as shown in Figs. 16a and 16b, the laboratory 4 prints, for example, an image row 23 of representative image data or image data selected by the customer 2, on the surface of the information-recording medium 5 or on jacket 20 of a storage case so that the undeveloped negative film 2a is identifiable. In this situation, the name (not shown) of the ordering customer 2, message 21, date information 27, memorandum column 26 in which the customer 2 himself/herself can write a note using a pen or the like, and other information, may be printed together.

Incidentally, the date information herein indicates the date, the time, and the season of photography, and includes the date of production of the image data, the date designated by the customer 2, and the date of writing image data of the customer 2 and the computer program on the information-recording medium 5. Further, in the case where a plurality of image data are recorded taking more than one day, the representative date (the most frequent photographing date), month, or the season may be indicated. By performing such printing on the surface of the information-recording medium 5 or on the jacket 20 of a storage case, the information-recording medium 5 can be customized, increasing the commodity value.

Further, for management, undeveloped negative film 2a or order sheet 2b received by the order shop in retail store 3 or the like is often given a unique number, possibly including symbols, such as a receipt number so that the film can be assuredly returned to the customer 2 later, wherein it is convenient for management to record the same number on the surface of information-recording medium 5 and on the jacket 20 of the storage case. If recorded in a form such as barcode 28 herein, the number can be easily read using a machine such as a barcode reader. Incidentally, a receipt number is adopted here, but the type of number is not limited to this, and any number convenient for production management in the laboratory 4 can be adopted.

Thereafter, in step S311, the information-recording media 5 in which the image data, the musical-and-vocal data, and the electronic album reproduction program are recorded, as well as the developed negative film 2, are sent to the retail store 3, and then provided by the retail store 3 to the customer 2 in step S312.

Then, the same as in the abovementioned first embodiment, the customer having received the information-recording medium 5 inserts the information-recording media 5 into a PC or the like, and executes the electronic album reproduction program and the slide show execution program to enjoy the electronic album and the slide show.

As described above, the information-recording media 5 in which the electronic album of the present embodiment is recorded is printed with music titles and artist names, and representative image data so that each vocal data and each image data are identifiable from all others, and further, the name of the customer, a message, etc. are printed as necessary, thereby allowing the customer to obtain an electronic album unique to the customer, which increases the commodity value to the information-recording media 5.

In the above embodiment, although the customer 2 selects, in the retail store 3, information-recording medium 5 having been subjected to printing that identifies each musical-and-vocal data, it is also possible to perform printing, all in the laboratory 4, which makes the musical-and-vocal data and the image data identifiable. In this case, a list of musical-and-vocal data and designs for printing is provided in the retail store 3, and the customer 2 designates desired pieces of music on the list. Further, although it has been described that the image data is written in the laboratory, in the case where the customer 2 provides the image data in an information-recording medium, it is possible that the retail store 3 writes the image data onto the information-recording medium 5, and the laboratory 4 writes only the electronic album reproduction program. Still further, in the first embodiment, printing which makes each musical-and-vocal data and image data identifiable may be performed in the laboratory 4.

In each embodiment described above, an electronic album produced by the laboratory 4 is sent to the retail store 3, and the customer 2 receives the electronic album there. However, the electronic album in the present embodiment can be reproduced only with the information-recording media 5, and since a message addressed to a specific customer is displayed or printed on the surface of the information-recording medium 5 or on the jacket of a storage case, the commodity value of the information-recording medium 5 itself is high, making it possible to use the information-recording medium 5 as a gift for an acquaintance or a friend. In this case, by giving the address, name, etc. of an acquaintance or a friend who receives the information-recording medium 5, at the time of ordering, the information-recording medium 5 can be mailed directly from the laboratory 4 or the retail store 3.

### [Embodiment 3]

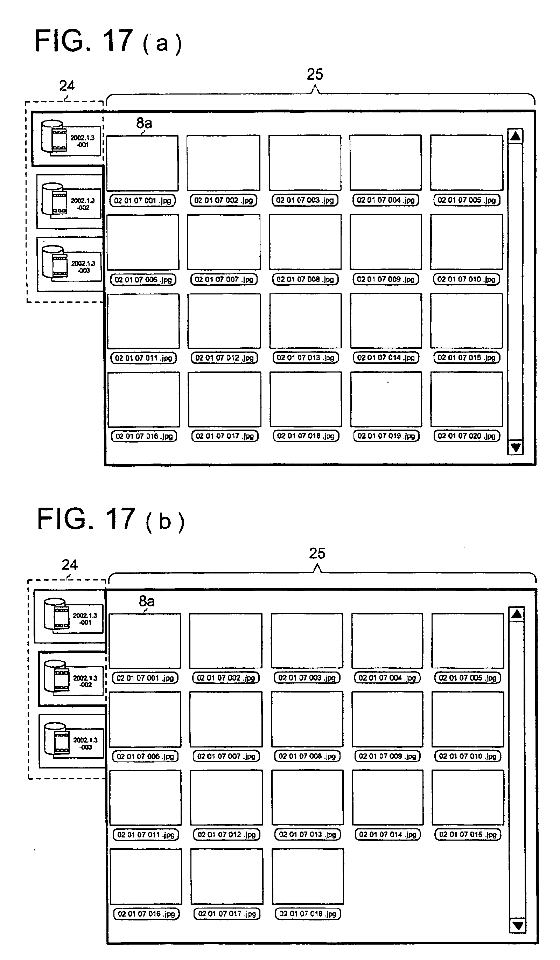

Next, described will be an information-recording medium in which an electronic album according to a third embodiment is recorded, referring to Figs. 17 to 22. Figs. 17 to 22 are diagrams showing examples of screens displayed at the time of execution of an electronic album reproduction program according to the third embodiment.

In the aforesaid first embodiment, it was mainly described on functions and operations of the electronic album reproduction program and the slide show execution program. However, a screen which is displayed during execution of the electronic album reproduction program or the slide show execution program, particularly a display screen of image data group 8 and individual exposure image data 8a, is displayed in such a manner that customer 2 can easily select image data, more details of which will be described below.

Likewise, as shown in the first embodiment, when the customer 2 has inserted information-recording medium 5 in which a computer program of the invention is recorded into a computer terminal such as a PC, menu screen 7 as shown in Fig. 5 is displayed. On this menu screen 7, a plurality of image data groups 8 each of which is arranged by a set of individual exposure image data 8a are displayed, wherein display of each image data group 8 is possible.

Specifically, as shown in Figs. 17a and 17b, each image data group 8 is provided with an index image display region 25 for displaying individual exposure image data 8a in arrays, and tag 24 for identifying the image data group 8, wherein, in the index image display region 25, image data groups 8 corresponding to the respective tags 24 are displayed as if they were laminated sheets, and a sheet corresponding to a selected tag 24 is displayed as the front sheet. For example, Fig. 17a shows the case where the upper tag 24 is selected from among the three tags 24, and on the screen, individual exposure image data 8a corresponding to the upper tag 24 are displayed on the front sheet. When the middle tag 24 is selected, as shown in Fig. 17b, individual exposure image data 8a corresponding to the middle tag 24 are displayed on the front sheet. In such a manner of display, the customer 2 can visually verify which image data group 8 the customer 2 is displaying.

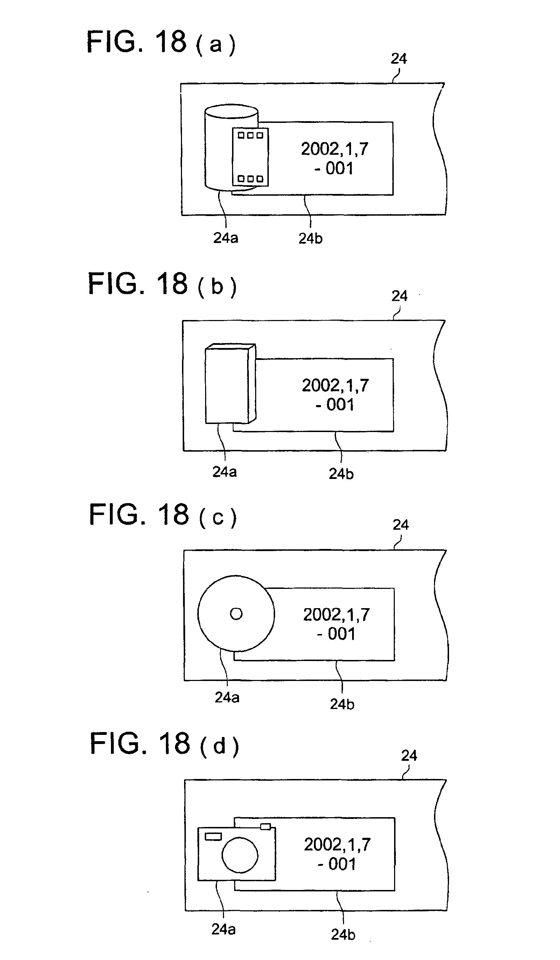

This tag 24 indicates information to identify the image data groups 8 to allow easy selection of image data. Described with reference to Figs. 18a to 18d in which only the part of a tag 24 is enlarged, each tag 24 comprises a medium identifying section 24a that indicates classification of a photographic film or a medium (a memory card, an information-recording medium such as a CD-R, a digital camera, etc.) in which image data provided by the customer 2 is recorded, and an auxiliary identifying section 24b that indicates information to identify the image data recorded in the photographic film or the medium. For example, In Fig. 8a, in order to identify an undeveloped negative film 2a provided by the customer 2, the medium identifying section 24a indicates an illustrated image of the film, and further, in order to identify specific image data in the film, the auxiliary identifying section 24b indicates a date (2002, 1, 7) being the order date of the information-recording medium 5 of the invention, the photographing date, or the like, and a serial number (-001).

Likewise, in Fig. 18b, an illustrated image of a memory card is shown, indicating that an information-recording medium such as a memory card was provided. In Fig. 18c, an illustrated image of a CD is shown, indicating that an information-recording medium such as a CD-R was provided, while in Fig. 18d, an illustrated image of a digital camera is shown, indicating that a digital camera or photographic images taken by a digital camera were provided. In such a manner, by indicating, on the medium identifying section 24a, an illustrated image of a provided photographic film or medium, the customer 2 can visually identify the type of a medium on which the photographic images of an image data group 8 are base on, which allows easy selection of an image data group 8. Incidentally, Figs. 18a to 18d show only examples, and any other indication mode is allowed as long as the photographic film or medium provided by the customer 2 can be visually identified.

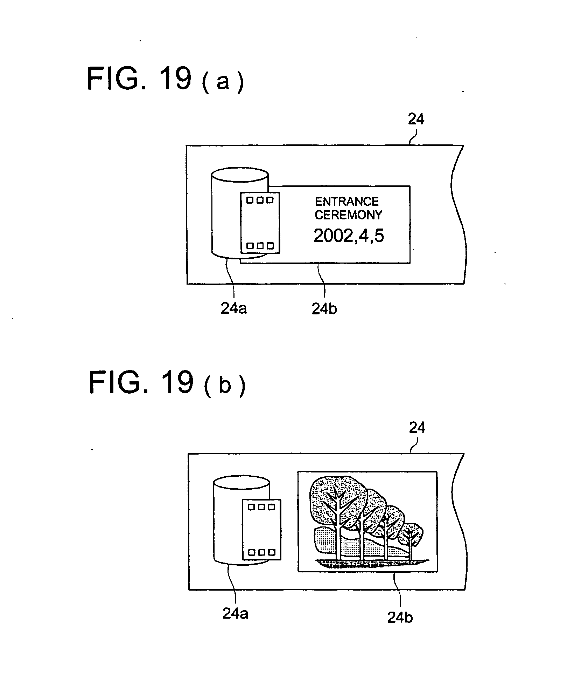

In Figs. 18a to 18d, the auxiliary section 24b shows a date such as the ordering date of the information-recording medium 5, photographing date, or the like, and a sequential serial number. However, information that enables identifying of image data in a photographic film or a medium may be indicated instead of or along with a date. For example, as shown in Fig. 19a, information (for example, the title of an entrance ceremony, school excursion, or wedding ceremony) showing the content of the image data may be described along with a date in the auxiliary identifying section 24b, and, as shown in Fig. 19b, it is possible to indicate a typical exposure image data 8a included in the image data group 8 (for example, the individual exposure image data 8a at the start of a film, an individual exposure image data 9a selected by the customer 2, the retail store 3, or the laboratory 4, etc.). With such an arrangement, the customer 2 can determine the content of image data included in an image data group 8 just by looking at a tag 24, and thus the selectivity of image data is extremely improved.

Figs. 19a and 19b shows only examples, and any content can be described in the auxiliary identifying section 24b as long as the content directly indicates information related to the image data or indirectly suggests it. A title or an individual exposure image data 8a to be indicated in the auxiliary section 24b can be designated at the time of ordering at an order shop.

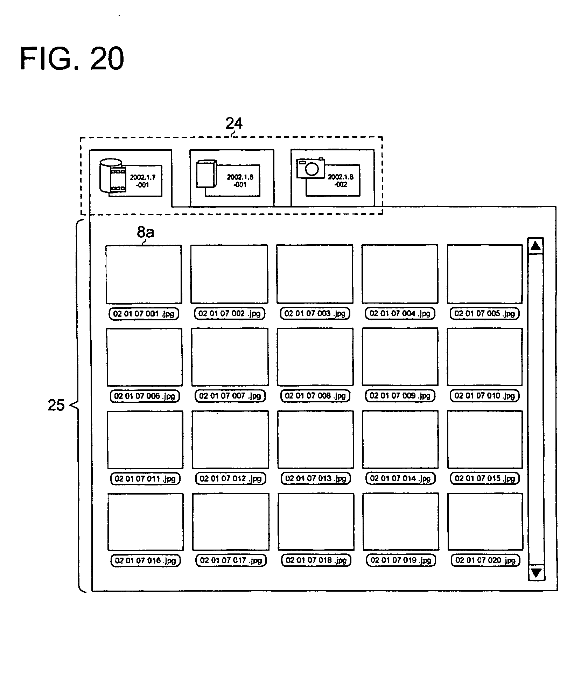

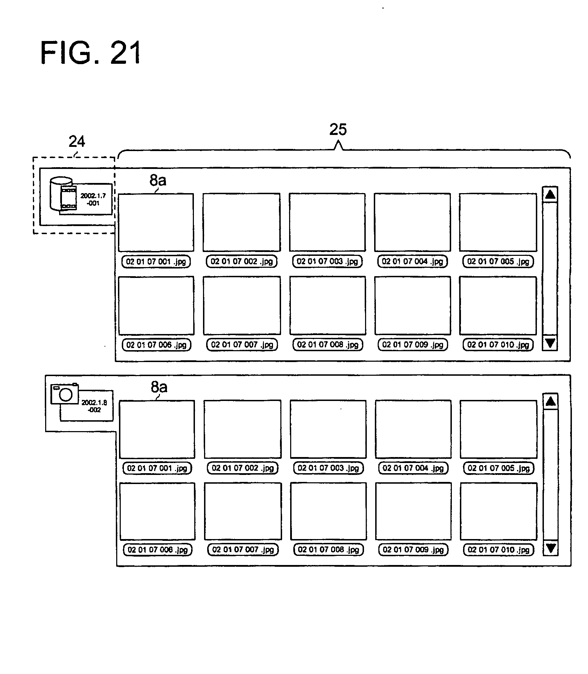

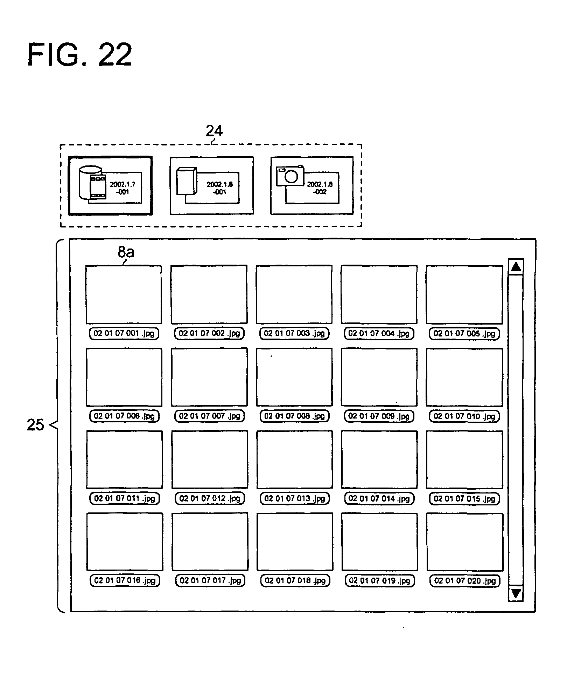

Regarding the arrangement of tags 24 and the index image display region 25, for example, as shown in Fig. 20, tags 24 may be provided above the index image display region 25; or as shown in Fig. 21, a plurality of sheets may be displayed with a smaller index image display region 25; or as shown in Fig. 22, tags 24 and the index image display region 25 may be displayed separately, having an image data group 8 corresponding to a selected tag 24 displayed in an index displaying mode. In addition to the abovementioned arrangements, in order to make a selected image data group 8 identifiable, the frame of a sheet and medium identifying sections 24a for displaying tags 24 may flash, the color of a sheet may change, or a sheet may be displayed in three dimensions to stand out.

As mentioned above, by displaying image data groups 8 and individual exposure image data 8a in a sheet comprised of index image display region 25 for displaying each exposure image data 8a in the index displaying mode, and tags 24 for indicating information on the type of a photographic film or a medium, and on the content of image data, even in the case of recording image data based on a plurality of photographic film or a plurality of media in the information-recording medium 5, suitable image data can be visually selected, and thus, operationability in an electronic album display program and a slide show execution program can be greatly enhanced.

In all the above embodiments, in providing customer 2 with information-recording medium 5, examples have been shown where musical-and-vocal information for emitting musical-and-vocal sounds in synchronization with display in a slide displaying mode is recorded in the information-recording medium 5 in advance. However, the invention is not limited to this, and it is also possible to provide the customer 2 with information-recording medium 5 in which information except this musical-and-vocal information is recorded, and the customer 2 can utilize musical-and-vocal information at the hand of the customer 2, the musical-and-vocal information having been selected by the customer 2. As a matter of course in this case, a computer program for correlation and/or synchronization between a slide show and the musical-and-vocal sounds may be recorded in the information-recording medium 5. The customer 2 can enjoy a slide show similar to that in the abovementioned embodiment in which musical-and-vocal sounds are emitted based on musical-and-vocal information at the hand of the customer 2.

As it has been described, an information-recording medium, in which an electronic album of the invention is recorded, and a slide show execution program have the following effects.

A first effect of the invention is that it is possible to view a slide show in which image data and musical-and-vocal data are synchronized with each other.

This is because the slide show execution program recorded in the information-recording medium can cause a computer to function as means for analyzing musical-and-vocal data and means for analyzing image data. For example, the play duration of musical-and-vocal data, and a tempo and phrases of a musical piece, are extracted. Based on this information, the display duration of image data and the duration of slide effect are automatically set; displaying of image data and playing of musical-and-vocal data are terminated simultaneously; and image data is displayed matching with the tempo. In such a manner, image data and musical-and-vocal data can be synchronized.

A second effect of the invention is that functions of the electronic album can be executed merely with the information-recording medium and without special software.

This is because in the information-recording medium of the invention, not only image data and musical-and-vocal data, but also an electronic album reproduction program, are recorded in a computer readable state, and thus, a customer only needs to insert the information-recording medium into a terminal of a PC or the like, after which the program starts and allows viewing the electronic album.

A third effect of the invention is that information-recording media can be identified, and thus the commodity value is increased.

This is because printing that enables identifying each musical-and-vocal data and each image data is performed on the surface of the information-recording medium of the invention or on the jacket of a storage case, and a design image, information specifying a customer, a message, etc. can be printed as desired.

A fourth effect of the invention is that even in the case where a plurality of photographic films or image data based on a plurality of media are recorded in the information-recording medium, it is easy to select an image data group and individual exposure image data.

This is because a sheet is displayed in displaying image data, wherein the sheet comprises an index image displaying region that displays pieces of exposure image data in the index displaying mode, and tags that indicate information on the type of a provided photographic film or medium and information on the content of image data. Thus, image data can be visually identified by a tag.

The information-recording medium of the invention can be used so that a customer who orders an electronic album, not only enjoys it, but can also use the information-recording medium as a gift. Further, the information-recording medium of the invention may be used so that the customer can give photographs of his/her child to his/her parents, distribute photographs taken at a wedding party to attendants, or distributes photographs of a trip to participants.

## Claims

1. An information-recording medium, **characterized in that**,
in the information-recording medium, there are recorded:
image information; and
a computer program for executing an operation of displaying images on a displaying means in a slide displaying mode, based on said image information, and at a same time, emitting musical-and-vocal sounds synchronized with said slide displaying mode from a speaker, based on musical-and-vocal information.

2. An information-recording medium, **characterized in that**,
in the information-recording medium, there are recorded:
image information;
musical-and-vocal information; and
a computer program for executing an operation of displaying images on a displaying means in a slide displaying mode, based on said image information, and at a same time, emitting musical-and-vocal sounds synchronized with said slide displaying mode from a speaker, based on said musical-and-vocal information.

3. The information-recording medium, described in claim 2, **characterized in that**
an image based on said image information and a name of music corresponding to said musical-and-vocal information are printed on an obverse surface of said information-recording medium.

4. The information-recording medium, described in claim 3, **characterized in that**
said musical-and-vocal information represent information of said musical-and-vocal sounds, and
said images and names of said musical-and-vocal sounds are printed on said obverse surface, in such a manner that a correlation between each of said images and each of said names of said musical-and-vocal sounds can be recognized.

5. An information-recording medium and a package, **characterized in that**,
in the information-recording medium packed in said package, there are recorded:
image information;
musical-and-vocal information; and
a computer program for executing an operation of displaying images on a displaying means in a slide displaying mode, based on said image information, and at a same time, emitting musical-and-vocal sounds synchronized with said slide displaying mode from a speaker, based on said musical-and-vocal information, and
a jacket, on which said images based on said image information and names of said musical-and-vocal sounds corresponding to said musical-and-vocal information are printed, is also packed in said package.

6. The information-recording medium, described in claim 5, **characterized in that**
said musical-and-vocal information represent information of said musical-and-vocal sounds, and
said images and names of said musical-and-vocal sounds are printed on said jacket, in such a manner that a correlation between each of said images and each of said names of said musical-and-vocal sounds can be recognized.

7. The information-recording medium, described in claim 2, **characterized in that**
said image information are generated by reading a film with a scanning operation, and
when emitting musical-and-vocal sounds synchronized with said slide displaying mode, musical-and-vocal sounds based on musical-and-vocal information of one musical piece are emitted for every slide displaying operation corresponding to image information of one roll of film.

8. The information-recording medium, described in claim 2, **characterized in that**,
in said slide displaying mode, said images are displayed one by one in even time-sharing mode within a time period of emitting musical-and-vocal sounds based on musical-and-vocal information of one musical piece.

9. The information-recording medium, described in claim 2, **characterized in that**,
in said slide displaying mode, referring to phrase information extracted from said musical-and-vocal information, said images are changed one by one for every phrase.

10. The information-recording medium, described in claim 2, **characterized in that**
said slide displaying mode is implemented with a slide effect established in advance, and
a processing time of said slide effect is adjusted, according to tempo information of a concerned musical piece extracted from said musical-and-vocal information.

11. The information-recording medium, described in claim 9 or 10, **characterized in that**
said phrase information and said tempo information are extracted from said musical-and-vocal information by employing a frequency analysis or a score analysis.

12. The information-recording medium, described in anyone of claims 1 - 11, **characterized in that**
in the information-recording medium, there is further recorded:
a computer program for executing an operation of displaying an information inputting icon, which is utilized for reversing a displaying order of said images to be displayed on said displaying means in said slide displaying mode.

13. The information-recording medium, described in anyone of claims 1 - 12, **characterized in that**
in the information-recording medium, there is further recorded:
a computer program for executing an operation of displaying a pre-view of said images in order to confirm a slide switching effect of said images to be displayed on said displaying means in said slide displaying mode.

14. The information-recording medium, described in anyone of claims 1 - 13, **characterized in that**
date-and-time information are recorded on an obverse surface of said information-recording medium.

15. The information-recording medium, described in claim 14, **characterized in that**
said date-and-time information are photographing time information of said image information.

16. The information-recording medium, described in claim 14, **characterized in that**
said date-and-time information are production time information of said information-recording medium.

17. A computer program, **characterized in that**
the computer program makes a computer to execute the operations of:
calculating a playing time of musical-and-vocal information from a file size of said musical-and-vocal information or header information, both recorded in an information recording medium in advance;
calculating a displaying time for one image information by dividing said playing time by number of image information files recorded in said information recording medium in advance;
displaying images based on said image information on a displaying means one by one for every displaying time in a slide displaying mode; and
emitting musical-and-vocal sounds synchronized with said slide displaying mode from a speaker, based on said musical-and-vocal information.

18. A computer program, **characterized in that**
the computer program makes a computer to execute the operations of:
extracting phrase information from musical-and-vocal information recorded in said information recording medium in advance;
displaying images on a displaying means in a slide displaying mode in which images are changed one by one for every phrase; and
emitting musical-and-vocal sounds synchronized with said slide displaying mode from a speaker, based on musical-and-vocal information.

19. A computer program, **characterized in that**
the computer program makes a computer to execute the operations of:
extracting tempo information from musical-and-vocal information recorded in said information recording medium in advance;
establishing a processing time of a slide effect based on said tempo information;
displaying images on a displaying means in a slide displaying mode in which images based on said image information are processed with a time established corresponding to said tempo information; and
emitting musical-and-vocal sounds synchronized with said slide displaying mode from a speaker, based on musical-and-vocal information.

20. A computer program, **characterized in that**
the computer program makes a computer to execute the operations recited in claim 17 or 18 and the operations recited in claim 19.

21. The computer program, described in anyone of claims 18-20, **characterized in that**
said phrase information and said tempo information are extracted from said musical-and-vocal information by employing a frequency analysis or a score analysis.

22. An information-recording medium readable for a computer, **characterized in that**,
in the information-recording medium, there are recorded:
image data acquired from a plurality of photographic-film rolls or from a plurality of mediums; and
a computer program for executing an operation of displaying a sheet image, which corresponds to each of said plurality of photographic-film rolls or said plurality of mediums, and at a same time, displaying index images, based on image data acquired from one of said plurality of photographic-film rolls or from one of said plurality of mediums, within said sheet image.

23. The information-recording medium, described in claim 22, **characterized in that**
said image data are generated by a digital camera.

24. The information-recording medium, described in claim 22 or 23, **characterized in that**
said sheet image is provided with a tag on which an information with respect to corresponding one of said photographic film rolls or said recording mediums is displayed.

25. The information-recording medium, described in claim 24, **characterized in that**
information for identifying a kind of said photographic film roll or said recording medium and/or information for identifying image data recorded on said photographic film roll or said recording medium is displayed on said tag.

26. The information-recording medium, described in claim 25, **characterized in that**
said information for identifying a kind of said photographic film roll or said recording medium is an illustration image of said photographic film roll or said recording medium.

27. The information-recording medium, described in claim 25, **characterized in that**
said information for identifying image data recorded on said photographic film roll or said recording medium includes anyone of an order date of said information-recording medium, date-and-time information for specifying a photographed date, a title for indicating contents of said image data recorded on said photographic film roll or said recording medium or an image data selected from said image data.

28. The information-recording medium, described in anyone of claims 22-27, **characterized in that**
index image data for displaying said index images are recorded in said information-recording medium.

29. The information-recording medium, described in anyone of claims 22-27, **characterized in that**
a computer generates index image data for displaying said index images, based on said computer program.

30. A manufacturing method of an information-recording medium, **characterized by** comprising the processes of
reading image data from a plurality of photographic-film rolls or from a plurality of mediums, which are provided by a customer;
recording said image data onto said information-recording medium; and
recording a computer program for executing an operation of displaying a sheet image, which corresponds to each of said plurality of photographic-film rolls or said plurality of mediums, and at a same time, displaying index images, based on image data acquired from one of said plurality of photographic-film rolls or from one of said plurality of mediums, within said sheet image.

31. The manufacturing method of the information-recording medium, described in claim 30, **characterized in that**
said image data are generated by a digital camera.

32. The manufacturing method of the information-recording medium, described in claim 30 or 31, **characterized in that**
said sheet image is provided with a tag on which an information with respect to corresponding one of said photographic film rolls or said recording mediums is displayed.

33. The manufacturing method of the information-recording medium, described in claim 32, **characterized in that**
information for identifying a kind of said photographic film roll or said recording medium and/or information for identifying image data recorded on said photographic film roll or said recording medium is displayed on said tag.

34. The manufacturing method of the information-recording medium, described in claim 33, **characterized in that**
said information for identifying a kind of said photographic film roll or said recording medium is an illustration image of said photographic film roll or said recording medium.

35. The manufacturing method of the information-recording medium, described in claim 33, **characterized in that**
said information for identifying image data recorded on said photographic film roll or said recording medium includes anyone of an order date of said information-recording medium, date-and-time information for specifying a photographed date, a title for indicating contents of said image data recorded on said photographic film roll or said recording medium or a image data selected from said image data.

36. The manufacturing method of the information-recording medium, described in anyone of claims 30-35, **characterized in that**
index image data for displaying said index images are recorded in said information-recording medium.
